# EUROPEAN PATENT APPLICATION

(11) **EP 4 534 816 A1**
(43) Date of publication of application: **09.04.2025**
(21) Application number: 24203272.0
(22) Date of filing: 27.09.2024
(51) Int. Cl.: F01N 3/32, F01N 3/22

(54) **IMPROVED VEHICULAR ENGINE SYSTEM, CONTROL METHOD AND VEHICLE**

(30) Priority: 02.10.2023 IT 202300020304
(71) Applicant: IVECO S.P.A., 10156 Torino (IT)
(72) Inventor: NAVARRO SANZ, Juan, 10156 TORINO (IT)
(74) Representative: Studio Torta S.p.A.

(57) **Abstract**

Vehicular engine system (1) for a vehicle comprising an engine (2), an air intake (3), compressor means (4), a charge air cooler (5) and an ATS, after treatment system, system (10; 20), the air intake (3) allowing air to be sucked from the environment by compressor means (4), the charge air cooler (5) being fluidly connected to compressor means (4) to receive the compressed air flow, cool down this latter and fluidly provide the cooled air flow to engine (2) as inlet, the engine (2) providing as outlet an exhaust flow, the exhaust flow being discharge in the environment by passing through the ATS system (20), the ATS system comprising a plurality of operative modules (21, 22, 23, 24) fluidically in series one with respect to the other, and a bypass system (30) configured to spill a portion of the compressed air downstream to air charge cooler (5) and provide this spilled portion to at least one (24) among operative modules (21, 22, 23, 24) in order to optimize the temperature and/or oxygen level of the exhaust flow before entering into such at least one (24) among the operative modules which comprises a first Selective catalyst reducer (SCR 21), a Diesel oxidation catalyst (DOC 22), a Diesel particulate filter (DPF 23) and a second Selective catalyst reducer (SCR 24), wherein said bypass system (30) provides said spilled air flow to said second SCR (24).

## Description

### CROSS-REFERENCE TO RELATED APPLICATIONS

This patent application claims priority from Italian patent application no. 102023000020304 filed on October 2, 2023, the entire disclosure of which is incorporated herein by reference.

### TECHNICAL FIELD

The present invention concerns a vehicular engine system.

The present invention finds its preferred, although not exclusive, application in heavy vehicles such as trucks. Reference will be made to this application by way of example below.

### BACKGROUND OF THE INVENTION

As known, vehicular engines are provided with an ATS (After- treatment systems) system configured to reduce the emissions of pollutants in the atmosphere.

In both diesel and otto engine cycles the ATS systems comprises a series of different modules that allow to interact chemically with the exhaust flow to transform the most harmful pollutants elements therein into less dangerous ones.

Such different modules comprise filters and catalysts and some among such catalysts operates at an optimum chemical profile when the exhaust flow comprises a values of oxygen within a predetermined range and/or when the temperature of the exhaust flow is within a predetermined temperature range.

However, it is clear the aforementioned optimum chemical and thermic profile are dificult to be reached straight from the engine exhaust during the whole operational range of the vehicle.

Accordingly, the efficiency in pollutants reduction via known ATS systems is reduced.

In view of the above, an aim of the present invention is to satisfy the above mentioned needs in a cost-effective and optimized manner.

### SUMMARY OF THE INVENTION

The aforementioned aim is reached by a vehicular engine system, a control method and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a first typology of vehicular engine system not making part of the present invention but useful to its understanding; and
- Figure 2 is a schematic representation of a second typology of vehicular engine system according to the invention.

### DETAILED DESCRIPTION OF THE INVENTION

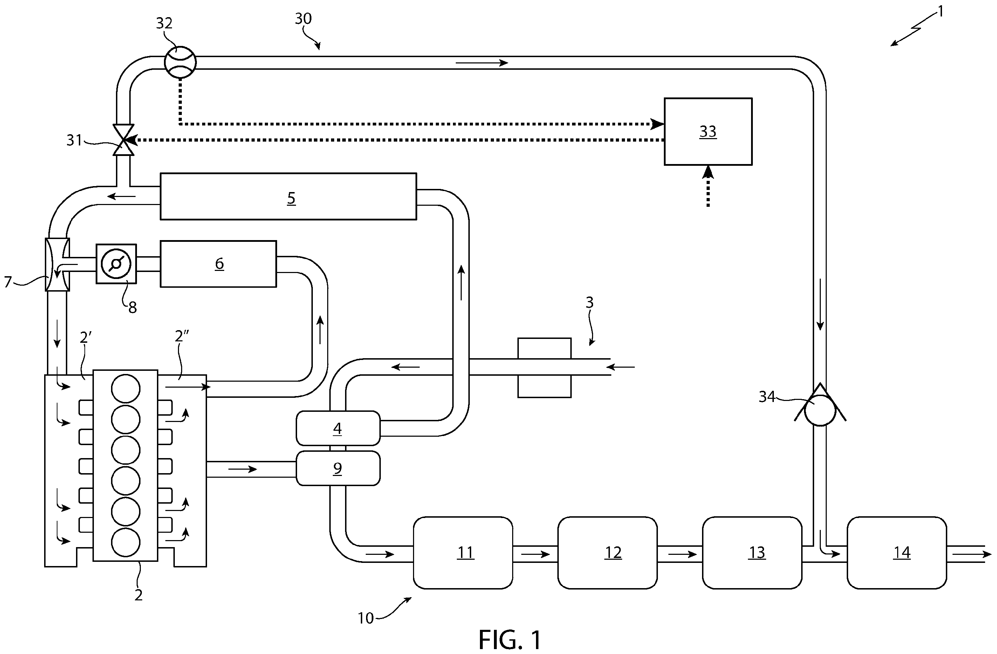

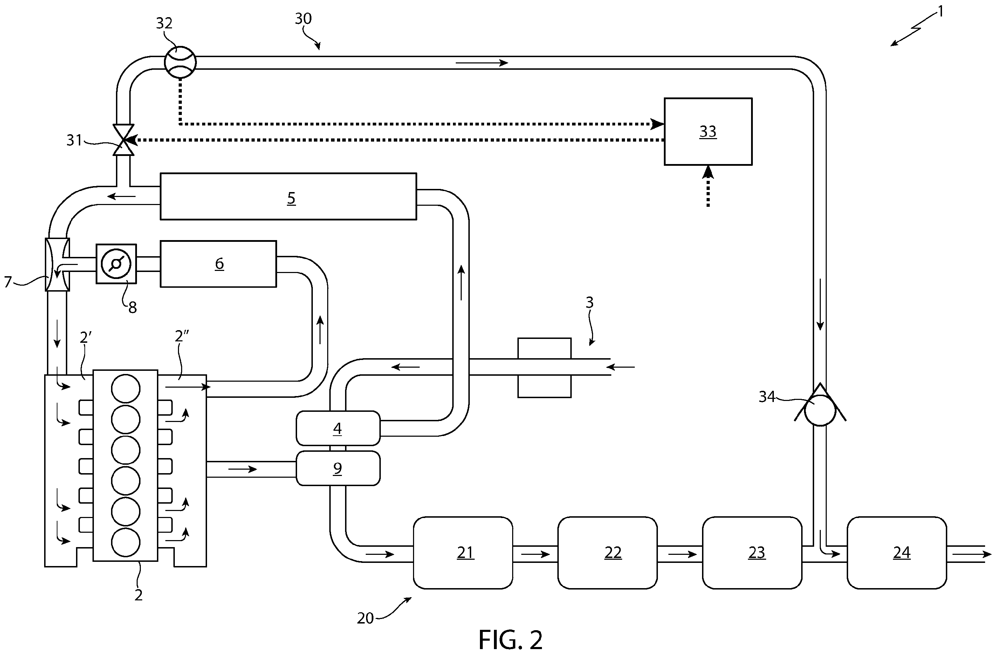

Figures 1 and 2 disclose and exemplarily embodiments of a vehicular engine system 1 comprises an internal combustion engine, ICE, 2 for producing torque for a vehicle such as a heavy vehicle.

The ICE 2 is an otto cycle engine in figure 1 and a diesel cycle engine in figure 2. Clearly, further typologies of ICEs could be used instead of the aforementioned ones.

The vehicular engine system 1 is provided for an air intake 3 configured to provide airflow to the ICE 2 from the environment. Advantageously, the air intake 3 is fluidly connected to the engine 2 via compressor means 4 and an air charge cooler 5 fluidly interposed in series between the air intake 3 and the engine 2.

As per se known, the compressor means 4 are configured to suck and compress air by air intake 3 from the environment and send this latter to the engine 2, in particular to an inlet manifold 2' thereof, and air charge cooler 5 is configured to cool down the compressed airflow before allow flowing into engine 2.

The vehicular engine system 1 further comprises an EGR (Exhaust gas recirculation) module 6 fluidly connecting an outlet manifold 2" of the ICE 2 to the inlet manifold 2' to spill a portion of the exhaust flow flowing out from ICE 2 and make recirculating the latter in order to increase its efficiency and/or to optimize the chemical profile of exaust gases for the ATS operation, as known.

To allow the operation of the EGR module 6, the vehicular engine system 1 further comprises valve means 7, such as a venturi valve, fluidly interposed between the air charge cooler 5 and the inlet manifold 2' and with the EGR module 6. Advantageously, the vehicular engine system 1 further comprises a EGR valve 8 configured to regulate the flow of recirculating exhaust flow towards the valve means 7.

The vehicular engine system 1 may further comprises turbine means 9 and an ATS (after treatment system) system 10, 20 fluidly in series one with respect to the other between the outlet manifold 2" of the ICE 2 and the exhaust discharge (not shown).

As per se known, the turbine means 9 may be operatively connected to the compressor means 4 in order to sustain their operation.

ATS 10, 20 comprises a plurality of modules in fluidic series one with respect to the other and configured to progressively depurate the exhaust flow.

Figure 1 and 2 further differ for the composition of the different modules making part of the ATS system 10, 20 and suitable for operating with respectively an otto cycle engine 2 or a diesel engine 2.

Making reference to otto cycle engine 2 as per the schematic of figure 1, the ATS system 10 may comprise in fluidic series one to the other the below modules:
- A first TWC (Three-way catalyst) 11;
- A second TWC (Three-way catalyst) 12 coupled to a CPF (Catalyzed Particulate Filter) 13; and
- A ASC (Ammonia Slip Catalyst)/CUC (Clean-up catalyst system) 14.

Making reference to diesel cycle engine 2 as per the schematic of figure 2, the ATS system 20 may comprise in fluidic series one to the other the below modules:
- A first SCR (Selective catalyst reducer) 21;
- A DOC (Diesel oxidation catalyst) 22 coupled to a DPF (Diesel particulate filter) 23; and
- A second SCR (Selective catalyst reducer) 24.

According to the invention, the vehicular engine system 1 comprises a bypass system 30 configured to spill portion of the compressed airflow downstream to compression means 4 and provide this spilled portion to at least one among modules of the ATS system 10, 20 in order to optimize the temperature and/or oxygen level of the exhaust flow before entering into such at least one among the modules.

If air charge cooler 5 is present, as per the present exemplarily embodiment, the bypass system 30 can be configured to spill portion of the compressed airflow downstream to the air charge cooler 5. In such case the spilled air flow is cooler than the one coming directly from the compression means 4.

The bypass system 30 in particular is configured to pick up the portion of compressed airflow downstream to the air charge cooler 5 but upstream with respect to valve means 7.

The bypass system 30 essentially comprises spilling valve means 31 configured to regulate the flow of the spilled portion of compressed and cooled airflow from the air charge cooler 5 to be directed towards the one among the modules of the ATS system 10, 20.

In detail, the bypass system 30 further comprises sensor means 31 configured to detect at least one physical property of the portion of spilled airflow by the valve means 31 so it can be employed to regulate the operation of the valve 31. In the present embodiment, sensor means 31 comprise a flowmeter.

Preferably, valve means 31 are electric-controlled valve means. and therefore the bypass system 30 comprises an electronic control unit 33 configured to control the operation of the valve means 31 in function of the data retrieved by sensor means 31 and/or on the base of data related to the operation of ICE 2 and/or on the base of predetermined data stored in the electronic control unit 33.

Accordingly, electronic control unit 33 comprises elaboration means configured to memorize or acquire the aforementioned data to elaborate this latter to send a control signal to valve means 31.

In particular, the predetermine data may comprise a value of optimal temperature range or oxygen concentration range to be provided to the element of the ATS system 10, 20. In particular, the data related to the operation of the ICE 2 may comprise the rpm and/or the torque provide to an output shaft thereof and/or a temperature of the exhaust gas flow and/or a flow of air provided to the engine 2.

Advantageously the portion of spilled airflow is directed to one of the devices where the chemical or temperature profile may require an extra oxygen or cooling flow. In the provided embodiments, the ASC/CUC 14 in an otto engine or the second SCR in a diesel engine.

Preferably, bypass system 30 further comprises check-valve means 34 fluidly interposed upstream the one of the devices mentioned above in order to avoid return of exhaust gases towards the valve means 31.

The operation of the embodiments of the invention as described above is the following. Since the operation is similar both for an otto and for a diesel engine, they will be described in a common way.

During the standard operation of the vehicular engine system 1, ICE 2 produces torque by combusting fuel and taking airflow via air intake 3, compressed and cooled via compression means 4 ad air charge cooler 5. The compression means 4 are carried by turbine means 9 that are actioned by the exhaust flow that passes through the ATS system 10, 20 that purifies the exhaust flow from harmful elements. According to operational data of the work vehicle, the control unit 33 may start control the opening of the valve means 32 and allow to pick up part of the airflow directed towards valve means 7, i.e. to intake manifold 2' of ICE 2 thereby cooling down and/or increasing oxygen level in the point of injection of the spilled portion of the airflow towards the selected element of the ATS system 10, 20. Thanks to the interpolation of the data related to engine 2 operation and of the data retrieved by sensor means 32, the control unit controls, such as in closed loop manner, the opening of valve means 31 in order to optimize the temperature/oxygen level directed towards the aforementioned selected element of the ATS system 10, 20.

In view of the above, the present invention further relates to a control method for controlling a vehicular engine system 1 as described above and comprising the following steps:
i. Detecting data from sensor means 32 and/or related to engine 2 operation;
ii. Elaborating data retrieved at step i) from said sensor means 32 and/or related to engine 2 and/or memorized in the control unit to determine a value of flow of spilled air to be provided to the ATS system 10, 20; and
iii. Send a control signal to the valve means 27 to provide the value of flow of spilled air elaborated at step ii) .

In view of the foregoing, the advantages of a vehicular engine system, a control method and a vehicle according to the invention are apparent.

Thanks to the bypass system it is possible to provide air to one among the modules of the ATS system 10, 20 thereby increasing the oxygen concentration or decreasing the temperature of exhaust flow in order to maintain these latter in an optimum range for efficient chemical reactions.

In particular, such spilled air can be provided to the device that more need this precise range of temperature/oxygen concentration thereby improving the overall efficiency of the ATS system and decreasing the emission of harmful pollutants.

Furthermore, the peculiar spill position do not cause variation into the engine operation since the compressor means can be controlled by engine control unit to provide more air to compensate the spilling one.

Furthermore, the spilled air, downstream to the air charge cooler, is substantially clean air that do not need to be further filtered, thereby not increasing overall pressure drop and the efficiency of the vehicular engine system.

In addition, the by-pass system can be provided also on existing vehicular engine systems without major modifications that need to increase the encumbrance thereof.

It is clear that modifications can be made to the described vehicular engine system, a control method and vehicle which do not extend beyond the scope of protection defined by the claims.

For example, the ATS system may comprise different elements, the spilled air flow may be provided in different points or in multiple points.

Similarly, the engine vehicular system 2 may comprise additional elements with respect to the claimed and described ones.

## Claims

1. Vehicular engine system (1) for a vehicle comprising an engine (2), an air intake (3), compressor means (4) and an ATS, after treatment system, system ( 20), said air intake (3) allowing air to be sucked from the environment by said compressor means (4), , said engine (2) providing as outlet an exhaust flow, said exhaust flow being discharge in the environment by passing through said ATS system (20), the ATS system comprising a plurality of operative modules (21, 22, 23, 24) fluidically in series one with respect to the other,
said vehicular engine system (1) comprising a bypass system (30) configured to spill a portion of the compressed air downstream to said compressor means (4) and provide this spilled portion to at least one (24) among said operative modules (21, 22, 23, 24) in order to optimize the temperature and/or oxygen level of the exhaust flow before entering into such at least one (24) among said operative modules (21, 22, 23, 24), wherein the ATS system (20) comprises in fluidic series one to the other the below operative modules:
• A first SCR, Selective catalyst reducer, (21);
• A DOC, Diesel oxidation catalyst, (22) coupled to a DPF, Diesel particulate filter, (23); and
• A second SCR, Selective catalyst reducer, (24).
wherein said bypass system (30) provides said spilled air flow to said second SCR (24).

2. Vehicular engine system according to claim 1, further comprising a charge air cooler (5), said charge air cooler (5) being fluidly connected to said compressor means (4) to receive the compressed air flow, cool down this latter and fluidly provide the cooled air flow to said engine (2) as inlet, wherein said bypass system (30) spill said portion of the compressed air downstream to air charge cooler (5).

3. Vehicular engine system according to any of the preceding claims, further comprising an exhaust gas recirculating, EGR, module (6), said by-pass system (30) spilling said portion of air flow upstream to said EGR module (6) .

4. Vehicular engine system according to claim 2, wherein said bypass system (30) comprises valve means (31) fluidly interposed between said charge air cooler (5) and said engine (2), said valve means (27) being configured to spill a portion of the compressed air flow towards said ATS system (20).

5. Vehicular engine system according to claim 4, further comprising sensor means (32) configured to acquire a physical parameter related to said spilled air flow and an electronic control unit (33), said valve means (31) being electric controlled valve means and said electronic control unit (33) comprising elaboration means being configured to control said valve means (31) on the base of the data acquired by said sensor means (32) and/or data related to the operation of said engine (2) and/or predetermined data memorized in said elaboration means.

6. Vehicular engine system according to claim 5, wherein said sensor means (32) comprise a flowmeter.

7. Vehicular engine system according to claim 5 or 6, wherein said data related to the operation of said engine (2) comprises at least one among the rpm of said engine (2), and/or an output torque provided by said engine (2) and/or the provided airflow to said engine (2) and/or the exhaust gas temperature.

8. Vehicular engine system according to any of claims 5 to 7, wherein said predetermined data stored in said control unit comprises a value of oxygen concentration and/or temperature related to said at least one (24) among said operative modules (21, 22, 23, 24).

9. Vehicular engine system according to any of the preceding claims, further comprising check valve means (34) fluidly interposed upstream to said at least one (24) among said operative modules (21, 22, 23, 24).

10. Vehicle comprising a vehicular engine system (1) according to any of the preceding claims.

11. Control method for controlling a vehicular engine system (1) as claimed in any of claims 5 to 8 and comprising the following steps:
i. Detecting data from sensor means (32) and/or related to engine (2) operation;
ii. Elaborating data retrieved at step i) from said sensor means (32) and/or related to engine (2) operation and/or memorized in said control unit to determine a value of flow of spilled air to be provided to the ATS system (20) ; and
iii. Send a control signal to said valve means (31) to provide the value of flow of spilled air elaborated at step ii).
